Europäisches Patentamt

European Patent Office

Office européen des brevets

(19)

(11) Veröffentlichungsnummer: **0 164 044**
**B1**

(12)

# EUROPÄISCHE PATENTSCHRIFT

(45) Veröffentlichungstag der Patentschrift:
**14.09.88**

(21) Anmeldenummer: **85106487.3**

(22) Anmeldetag: **25.05.85**

(51) Int. Cl.⁴: **F 16 L 55/04,** F 02 M 37/02,
B 01 D 27/10, F 17 D 1/20

(54) **Dämpferelement für pulsierende Flüssigkeitsströmungen.**

(30) Priorität: **06.06.84 DE 3421007**

(43) Veröffentlichungstag der Anmeldung:
**11.12.85 Patentblatt 85/50**

(45) Bekanntmachung des Hinweises auf die Patenterteilung:
**14.09.88 Patentblatt 88/37**

(84) Benannte Vertragsstaaten:
**DE FR GB IT**

(56) Entgegenhaltungen:
**DE - A - 2 305 938**

(73) Patentinhaber: **KNECHT Filterwerke GmbH,
Haldenstrasse 48, D-7000 Stuttgart 50 (DE)**

(72) Erfinder: **Fiedler, Jiri, Dipl.-Ing., Egerländer Strasse 34,
D-7440 Nürtingen (DE)**

(74) Vertreter: **Pfusch, Volker, Dipl.-Ing., MAHLE GMBH
Patentabteilung Pragstrasse 26-46 Postfach 50 07 69,
D-7000 Stuttgart 50 (DE)**

## Beschreibung

Die Erfindung betrifft ein Dämpferelement für pulsierende Flüssigkeitsströmungen nach dem Oberbegriff des Patentanspruchs 1.

Solche Dämpfungselemente sind z.B. aus der DE-A 2 902 995 bekannt. Die Dämpfung der Druckpulsationen erfolgt dort in der Weise, dass die Zu- und Ableitungen für die durchströmende Flüssigkeit so zueinander versetzt in dem Gehäuse unter Abstimmung auf dessen Abmessungen angeordnet sind, dass sie an Stellen liegen, die den sich in dem Gehäuse einstellenden Schwingungswellen in bestimmter Weise zugeordnet sind. Diese Dämpferelemente müssen jeweils auf bestimmte Frequenzbereiche, in denen sie wirksam sein sollen, abgestimmt werden.

Als Dämpferelement für pulsierende Flüssigkeitsströmungen sind auch sogenannte Unstetigkeitsstellen in der Strömungsleitung (z.B. DE-A 2 832 299) oder in die Leitungen eingesetzte Membranen (z.B. DE-A 2 725 787 oder EP-B 0 011 189) bekannt.

Hiervon ausgehend liegt der Erfindung die Aufgabe zugrunde, ein konstruktiv einfacheres und durch Unterbringung auf engstem Raum optimal wirksames Dämpferelement zu schaffen.

Gelöst wird diese Aufgabe durch eine Ausbildung des Dämpferelementes nach dem kennzeichnenden Merkmal des Anspruchs 1.

Wesentliche Faktoren für die Wirksamkeit der erfindungsgemässen Dämpfereinrichtung sind einmal die Strömungsumlenkung auf eine gekrümmte Bahn und zum anderen die dämpfende Wirkung der Flüssigkeit auf die schwingenden Kanalwände, wenn diese wie nach der Erfindung vorgesehen, voll in der zu dämpfenden Flüssigkeitsströmung liegen.

Besonders zweckmässig ist es, die Strömung in einem um mindestens 180°, besser noch um wenigstens 270°, gekrümmten Kanal zu führen. Dabei sollte der Strömungskanal möglichst an keiner Stelle einen Krümmungsradius R aufweisen, der grösser ist als 100 mm. Um eine ausreichende Dämpfungswirkung zu erhalten, empfiehlt es sich, dass der Teil der Begrenzungswände des innerhalb des Gehäuses liegenden Kanals, der aussen mit der zu fördernden Flüssigkeit in direktem Kontakt steht, mindestens 30%, besser noch mehr als 50% der Begrenzungswände insgesamt ausmacht.

Bei pulsierenden Flüssigkeitsströmen, die ohnehin durch ein Filter zum Abtrennen von Verunreinigungen geleitet werden, wird das Filtergehäuse als Gehäuse für das Dämpfungselement verwendet. Dabei hat der gekrümmte Kanal den grossen Vorteil, auf sehr engem Raum, z.B. in Form einer zwischen Filtergehäusestirnseite und Filtereinsatz unterzubringenden Spirale, ausgebildet werden zu können. Dabei ist es sogar möglich, den spiralförmigen Kanal z.B. in die Stirnwand des Filtergehäuses zu integrieren. Desgleichen kann der Kanal auch in den Stirnteil eines patronenförmigen Filtereinsatzes integriert sein.

Für die zu erzielenden Dämpfungswirkung hat es sich im übrigen als äusserst vorteilhaft erwiesen, den Strömungsquerschnitt des gekrümmten erfindungsgemässen Kanals kleiner als denjenigen der die Flüssigkeit in das Gehäuse des Dämpferelementes führenden Leitung zu wählen.

Ein Ausführungsbeispiel der Erfindung ist in der Zeichnung dargestellt. Es zeigen

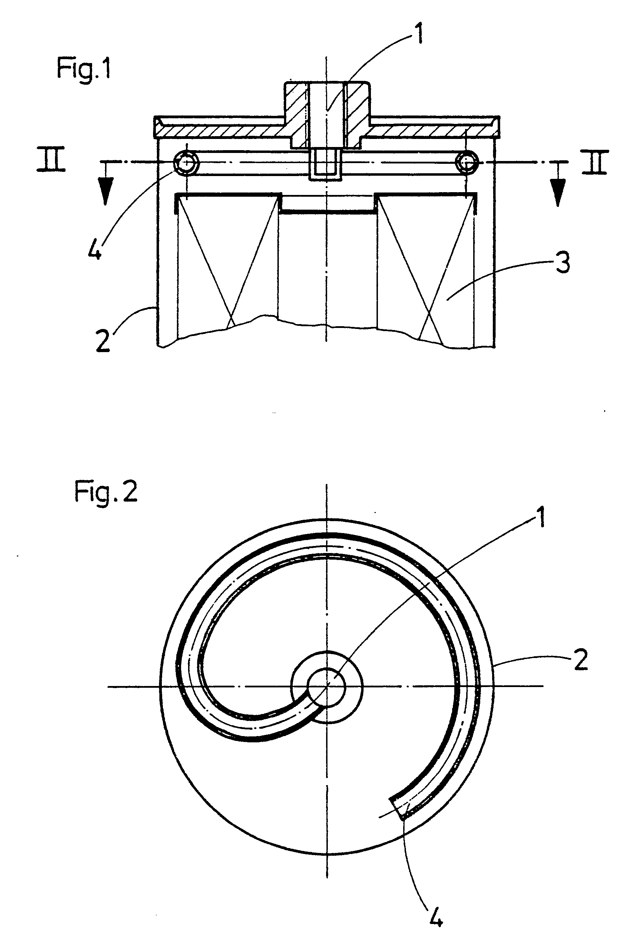

Fig. 1 einen Längsschnitt durch ein Filtergehäuse mit einem patronenförmigen Filtereinsatz mit zwischen Stirnwand des Filtereinsatzes und Stirnwand des Filtergehäuses angeordnetem gekrümmten Kanal;

Fig. 2 eine Ansicht des gekrümmten Kanals nach dem Schnitt II–II in Fig. 1;

Fig. 3 ein Filtergehäuse wie im Schnitt nach Fig. 1 mit einem in die Stirnwand des Filtergehäuses integrierten gekrümmten Strömungskanal;

Fig. 4 eine Ansicht des integrierten Strömungskanals gemäss Linie IV–IV in Fig. 3;

Fig. 5 ein Filtergehäuse wie im Schnitt nach Fig. 1 mit in die Stirnseite des patronenförmigen Filtereinsatzes integriertem gekrümmten Strömungskanal;

Fig. 6 eine Ansicht nach Linie VI–VI in Fig. 5.

Die pulsierende Flüssigkeit gelangt durch eine Öffnung 1 in ein Filtergehäuse 2, in dem ein patronenförmiger von aussen nach innen durchströmter Filtereinsatz 3 sich befindet. Von der Öffnung 1 gelangt die pulsierende zu dämpfende Flüssigkeit in einen z.B. als ein gekrümmtes Rohr 4 ausgebildeten Strömungskanal. In diesem Rohr 4 wird die Strömung etwa auf einer um 360° gekrümmten Bahn geführt. Der Strömungsquerschnitt des Rohres 4 ist kleiner als der Strömungsquerschnitt des in die Öffnung 1 führenden Zuleitungsrohres.

In eine solche Dämpfungseinrichtung wurde pulsierende Flüssigkeit in Mengenströmen zwischen 40 l/h und 85 l/h und bei einem Druck von 5,5 bar, unter dem die Flüssigkeit in dem Leitungssystem stand, eingeführt. Die Druckpulsationen vor Einführen in die Dämpfungseinrichtung lagen bei Werten zwischen 5,7 bar und 7,5 bar. In der Dämpfungseinrichtung konnten die Pulsationen auf Werte von 5,5 bar gebracht werden.

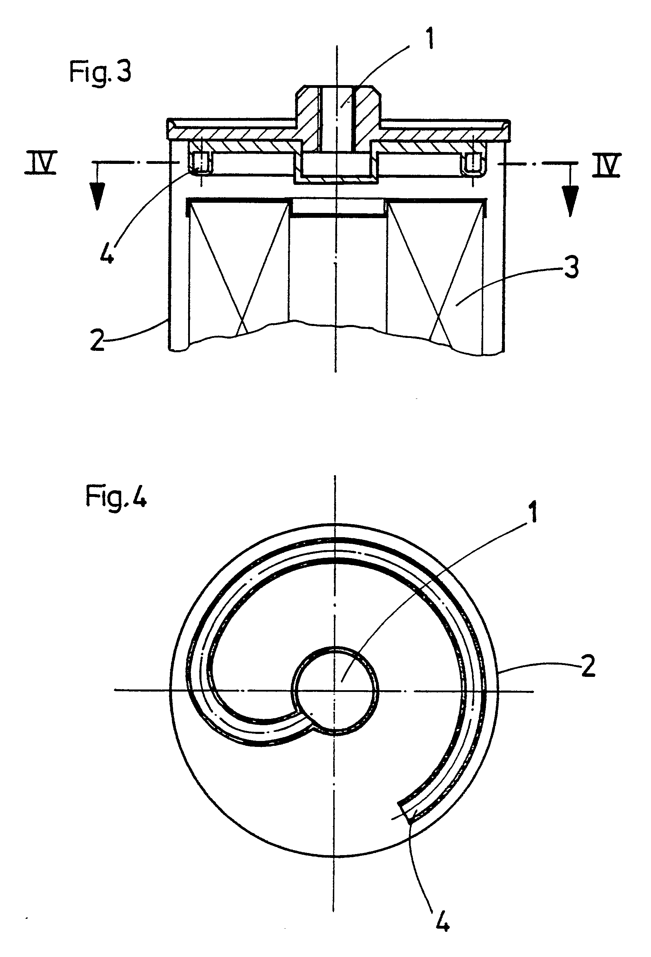

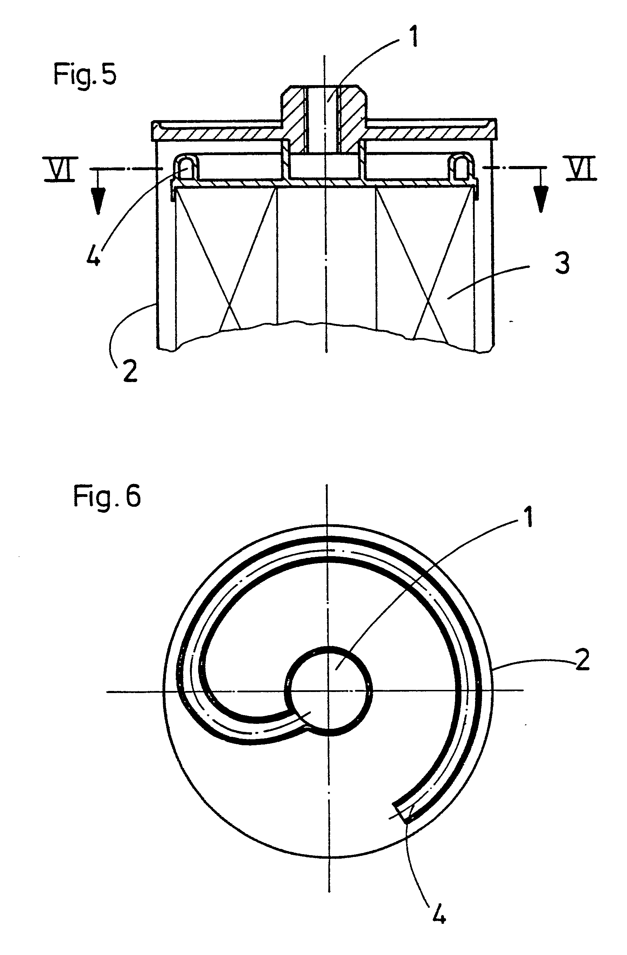

Ähnliche Ergebnisse liessen sich mit den Dämpfungseinrichtungen gemäss den Fig. 3–6 erzielen, bei denen das Rohr 4 bei der Ausführungsform nach den Fig. 3 und 4 in die Stirnwand des Filtergehäuses und bei derjenigen nach den Fig. 4 und 5 in die Endscheibe des Filtereinsatzes integriert ist.

## Patentansprüche

1. Dämpferelement für pulsierende Flüssigkeitsströmungen, insbesondere zur Glättung und zum Abbau von in Kraftstoffversorgungsanlagen für Verbrennungsmotoren von Kraftfahrzeugen entstehenden Druckschwingungen, bestehend aus einem von der Flüssigkeit durchströmten geschlossenen Gehäuse, in das ein geschlossener Strömungskanal (4) hineinragt, dadurch gekennzeichnet, dass dieser Kanal (4) gekrümmt ist und mindestens 30% der Begrenzungswände des Kanals aussen mit der zu fördernden Flüssigkeit derart in Kontakt stehen, dass Schwingungen aus der Begrenzungswand auf die Flüssigkeit übertragbar sind.

2. Dämpferelement nach Anspruch 1, dadurch gekennzeichnet, dass mindestens 50% der Begrenzungswände des Kanals (4) aussen mit der zu fördernden Flüssigkeit in Kontakt stehen.

3. Dämpferelement nach Anspruch 1 oder 2, dadurch gekennzeichnet, dass der geschlossene Kanal (4) wenigstens um 180 Grad gekrümmt ist.

4. Dämpferelement nach einem der vorhergehenden Ansprüche, dadurch gekennzeichnet, dass der geschlossene Kanal (4) wenigstens um 270 Grad gekrümmt ist.

5. Dämpferelement nach einem der vorhergehenden Ansprüche, dadurch gekennzeichnet, dass der gekrümmte geschlossene Kanal (4) einen Krümmungsgrad von 100 mm an keiner Stelle überschreitet.

6. Dämpferelement nach einem der vorhergehenden Ansprüche, dadurch gekennzeichnet, dass der Strömungsquerschnitt des gekrümmten Kanals (4) kleiner als derjenige der die Flüssigkeit in das Gehäuse (2) des Dämpferelements führenden Leitung ist.

7. Dämpferelement nach einem der vorhergehenden Ansprüche, dadurch gekennzeichnet, dass als Gehäuse (2) für das Dämpferelement das Gehäuse eines Durchflussfilters dient, wobei das Durchflussfilter zylindrisch mit an den gegenüberliegenden Stirnseiten angebrachtem Zu- und Ablauf und dazwischenliegendem kreisförmigen radial durchströmten patronenförmigem Filtereinsatz (3) ausgebildet ist und bei dem der gekrümmte geschlossene Kanal (4) in dem Bereich zwischen einer Stirnseite des Filtergehäuses (2) und der Stirnseite des Filtereinsatzes (3) angeordnet ist.

8. Dämpferelement nach Anspruch 7, dadurch gekennzeichnet, dass der gekrümmte Kanal (4) auf der Einströmseite des Filtergehäuses (2) in die dortige stirnseitige Abschlussscheibe des Filtergehäuses eingeformt ist.

9. Dämpferelement nach Anspruch 7, dadurch gekennzeichnet, dass der gekrümmte Kanal (4) auf der Einströmseite des Filtergehäuses in die dortige stirnseitige Abschlussscheibe des patronenförmigen Filtereinsatzes (3) eingeformt ist.

**Claims**

1. Damper element for pulsating fluid flows, particularly for smoothing out and for dissipating pressure vibrations created in fuel supply systems for internal combustion engines of motor vehicles, the damper element consisting of a closed housing through which the fluid passes and into which a closed flow duct (4) projects, characterised in that this passage (4) is curved, at least 30% of the boundary walls of the passage being externally so in contact with the fluid to be conveyed that vibrations from the boundary wall can be transmitted to the fluid.

2. Damper element according to Claim 1, characterised in that at least 50% of the boundary walls of the passage (4) are externally in contact with the fluid to be conveyed.

5. Damper element according to Claim 1 or 2, characterised in that the closed passage (4) is curved by at least 180 degrees.

4. Damper element according to one of the preceding Claims, characterised in that the closed passage (4) is curved through at least 270 degrees.

5. Damper element according to one of the preceding Claims, characterised in that the curved closed passage (4) does not at any point exceed a degree of curvature of 100 mm.

6. Damper element according to one of the preceding Claims, characterised in that the flow cross section of the curved passage (4) is smaller than that of the line leading the fluid into the housing (2) of the damper element.

7. Damper element according to one of the preceidng claims, characterised in that as a housing (2) for the damper element, the housing of a through flow filter is used, the through flow filter being constructed cylindrically with inlet and discharge apertures provided at the opposite end faces and, in between them, a circular and radially traversed cartridge-like filter insert (3) and in which the curved closed passage (4) is disposed in the region between one end of the filter housing (2) and the end face of the filter insert (3).

8. Damper element according to Claim 7, characterised in that the curved passage (4) is integrally formed on the inflow side of the filter housing (2) into the closure disc mounted at the relevant end of the filter housing.

9. Damper element according to Claim 7, characterised in that the curved passage (4) is formed on the inflow side of the filter housing in the closure plate provided at the end of the cartridge-like filter insert (3).

**Revendications**

1. Amortisseur de pulsations dans des courant liquides, en particulier pour égaliser la pression et détruire les variations ondulatoires de pression apparîssant dans des installations d'alimentation en carburant pour des moteurs à combustion interne pour des automobiles, cet amortisseur consistant en un corps ou boîtier fermé parcouru par le liquide et dans lequel pénètre un canal (4) fermé d'écoulement, amortisseur caractérisé en ce que ce canal (4) est incurvé et en ce qu'au moins 30% des parois de délimitation du canal sont en contact externe avec le liquide à acheminer, de façon que des oscillations puissent être transmises de la paroi de délimitation au liquide.

2. Amortisseur selon la revendication 1, caractérisé en ce qu'au moins 50% des parois de délimitation du canal (4) sont en contact à l'extérieur avec le liquide à acheminer.

3. Amortisseur selon la revendication 1 ou 2, caractérisé en ce que le canal (4) fermé est incurvé sur au moins 180°.

4. Amortisseur selon l'une des revendications précédentes, caractérisé en ce que le canal (4) fermé est incurvé sur au moins 270°.

5. Amortisseur selon l'une des revendications précédentes, caractérisé en ce que le canal (4) fermé et incurvé n'excède en aucun endroit un degré ou rayon de courbure de 100 mm.

6. Amortisseur selon l'une des revendictions précédentes, caractérisé en ce que la section d'écoulement du canal (4) incurvé est inférieure à celle du conduit introduisant le liquide dans le corps (2) de l'amortisseur.

7. Amortisseur selon l'une des revendications précédentes, caractérisé en ce que le corps d'un filtre traversé par le liquide sert de corps ou boîtier (2) de l'amortisseur, de filtre étant de forme cylindrique et comportant une entrée et une sortie disposées sur des parois avant opposées et comportant également un organe filtrant (3) en forme de cartouche circulaire, disposé entre l'entrée et la sortie et parcouru radialement, et dans lequel le canal (4) fermé et incurvé est disposé dans la zone comprise entre un côté avant du corps (2) du filtre et le côté avant de l'organe filtrant (3).

8. Amortisseur selon la revendication 7, caractérisé en ce que le canal (4) incurvé est incorporé, du côté de l'entrée du corps (2) du filtre, dans la plaque circulaire de fermeture avant du corps de filtre.

9. Amortisseur selon la revendication 7, caractérisé en ce que le canal (4) incurvé est incorporé, du côté entrée du corps du filtre, dans la plaque de fermeture avant de l'organe filtrant (3) en forme de cartouche.

Fig.1

Fig.2

Fig. 3

IV

IV

1

4

2

3

Fig. 4

1

2

4

Fig. 5

Fig. 6